# EUROPÄISCHE PATENTSCHRIFT

(11) **EP 1 498 652 B1**
(45) Veröffentlichungstag und Bekanntmachung des Hinweises auf die Patenterteilung: **29.03.2006**
(21) Anmeldenummer: 04025027.6
(22) Anmeldetag: 21.07.2000
(51) Int. Cl.: F16L 13/14

(54) **Verfahren zur Verbindung eines Pressfittings mit einem Rohr sowie Pressgerät zur Durchführung dieses Verfahrens**
Process for connecting a press fitting with a tube and device for carrying out this process
Procédé de connexion d'un embout d'emmanchement avec un tuyau et dispositif pour la mise en oeuvre de ce procédé

(30) Priorität: 21.09.1999 DE 19945113
(43) Veröffentlichungstag der Anmeldung: 19.01.2005
(62) Teilanmeldung aus: 00956246.3
(73) Patentinhaber: NOVOPRESS GMBH PRESSEN UND PRESSWERKZEUGE & CO. KG., 41460 Neuss (DE)
(72) Erfinder: Lohmann, Gert, 41468 Neuss (DE)
(74) Vertreter: Paul, Dieter-Alfred

(56) Entgegenhaltungen:
- EP-A- 0 879 985
- CH-A- 682 942
- DE-C- 19 620 165
- US-A- 5 824 906

## Beschreibung

Die Erfindung betrifft ein Verfahren zur Verbindung eines Preßfittings mit einem Rohr mittels eines Preßgeräts, bei dem Preßfitting und Rohr um eine bestimmte Einschubtiefe ineinandergesteckt und dann das Preßfitting und/oder das Rohr mit Hilfe des Preßgeräts radial nach innen plastisch verformt wird bzw. werden, wobei das Preßgerät mit einer Markierungseinrichtung versehen ist, mittels der im Rahmen eines Preßvorgangs eine Markierung auf das Preβfitting und/oder das Rohr aufgebracht wird. Die Erfindung bezieht sich ferner auf ein Preßgerät zur Durchführung dieses Verfahrens.

Zum Verbinden von Rohren ist es bekannt, hülsenförmige Preßfittings zu verwenden, die aus Kunststoff oder Metall bestehen. Zwecks Herstellung der Rohrverbindung werden die Rohrenden und das Preßfitting ineinandergesteckt und radial unter plastischer verformung zusammengepreßt. Dabei gibt es zwei Arten von Preßfittings, nämlich solche, die in die Rohrenden eingesteckt werden, und solche, die über die Rohrenden geschoben werden. Solche Rohrverbindungen und die zugehörigen Preßfittings sind beispielsweise aus der DE-C-11 87 870 und der EP-B-0 361 630 bekannt.

Die Verpressung des Preßfittings und des Rohrs geschieht mit Hilfe von Preßgeräten, wie sie in verschiedenen Ausführungsformen beispielsweise aus der DE-C-21 36 782, DE-A-34 23 283, EP-A-0 451 806, EP-B-0 361 630, DE-C-42 40 427 und DE-A-196 31 019 bekannt sind. Die Preßgeräte haben zwei oder mehr Preßbacken, die beim Preßvorgang radial nach innen unter Bildung eines geschlossenen Preßraums bewegt werden können. Als Antrieb zum Bewegen der Preßbacken ist vielfach ein Hydraulikkolben vorgesehen, der über eine handbetriebene oder elektromotorisch angetriebene Pumpe mit Hydraulikdruck beaufschlagt werden kann.

Die Herstellung der vorbeschriebenen Rohrverbindungen geschieht insbesondere zur Installation von wasserführenden, aber auch gasführenden Leitungen in Gebäuden. Dabei müssen eine Vielzahl von Verpressungen durchgeführt werden, und zwar auch an Stellen, wo die Verpressung visuell nicht ausreichend kontrolliert werden kann, weil sie nur schwer zugänglich ist und/oder wenig Licht zur Verfügung steht. Um dennoch eine Überprüfung der Dichtheit der Rohrverbindung durchzuführen, werden die Leitungen mit einer Flüssigkeit gefüllt oder einer Druckprobe unterzogen. Dies hat jedoch bei einer Undichtigkeit zur Folge, daß das verwendete Medium austritt, wodurch erhebliche Schäden entstehen können.

Zur Behebung dieses Problems ist es bekannt, wenigstens eine Preßbacke mit einer Markiereinrichtung in Form einer in Preßrichtung liegenden Ausnehmung vorzusehen, so daß beim Preßvorgang in die Oberfläche des Preßfittings ein charakteristisches Prägezeichen eingeformt wird, dessen Ausprägungsgrad abhängig ist von der Qualität der Verpressung (vgl. DE-C-196 20 165). Damit soll erreicht werden, daß das Prägezeichen seine charakteristische Ausprägung bei völligem Schließen der Preßbacken erhält, um in einfacher Weise die Qualität der Verpressung überprüfen zu können. Dies soll der vom Bauherrn beauftragten Kontrollinstanz die Möglichkeit geben, nach dem Verpressen alle Verpreßstellen visuell zu kontrollieren und die Ausprägung des Prägezeichens zu begutachten.

Dieses - gattungsgemäße - Verfahren hat den Nachteil, daß die Ausprägung des Prägezeichens schon während des Preßvorgangs beginnt, so daß auch bei einer unvollkommenen Verpressung, bei der die Endpreßstellung nicht erreicht worden ist, ein Prägezeichen sichtbar ist. Es ist dann außerordentlich schwierig und wohl nur durch einen erfahrenen Fachmann erfaßbar, ob das Prägezeichen tatsächlich seine Endausprägung erreicht hat oder nicht. Dabei ist zu berücksichtigen, daß die Sichtverhältnisse am Bau aufgrund bei der Installation noch nicht vorhandener Beleuchtung sehr schlecht sind, so daß möglicherweise ein Prägezeichen erkennbar ist, nicht jedoch, ob das Prägezeichen seine Endausprägung hat, zumal die Übergänge gleitend sind. Die auf diese Weise hergestellten Prägezeichen können deshalb keine sichere Grundlage dafür bilden, ob die Verpressung bis zum Ende durchgeführt worden ist oder nicht. Vielmehr suggerieren sie Sicherheit, wo keine gegeben ist.

Der Erfindung liegt die Aufgabe zugrunde, ein Verfahren zum Verbinden von Preßfittings mit einem Rohr bereitzustellen, nach dessen Anwendung eindeutig erkennbar ist, ob eine vollständige Verpressung durchgeführt worden ist. Eine weitere Aufgabe besteht darin, ein Preßgerät so auszubilden, daß damit das Verfahren durchgeführt werden kann.

Die erste Aufgabe wird erfindungsgemäß dadurch gelöst, daß erst eine Markierung aufgebracht wird, wenn das Preßwerkzeug seine Endpreßstellung erreicht hat. Grundgedanke der Erfindung ist es also, eine Markierung erst dann auf den Verbindungsbereich aufzubringen, wenn sichergestellt ist, daß das Preßwerkzeug seine Endpreßstellung erreicht hat, also eine vollständige Verpressung der Verbindung aus Preßfitting und Rohr stattgefunden hat. Die Markierung gibt dann nicht nur - wie im Stand der Technik - die Information, daß überhaupt eine Verpressung stattgefunden hat, sondern zusätzlich die hohe Gewißheit, daß die Verpressung ordnungsgemäß durchgeführt worden ist und damit die Verbindung dicht ist.

In Ausbildung der Erfindung ist vorgesehen, daß die Markierung mittels eines Druckorgans ausgebildet ist, mit der eine Druckmarkierung auf den Verbindungsbereich aufgebracht werden kann, beispielsweise in Form einer Prägung oder eines Aufdrucks. Statt dessen kann die Markierung auch mittels eines Energiestahls, beispielsweise eines Laser- oder Funkenerosionsstrahls, aufgebracht werden. Weiterhin besteht die Möglichkeit, eine Einbrennmarkierung zu erzeugen oder eine Farbmarkierung aufzubringen.

Nach einem weiteren Merkmal der Erfindung ist vorgesehen, daß das Rohr mit einer an den Bereich der Einschubtiefe angrenzenden Beschichtung versehen wird. Ein Kontrolleur kann dann feststellen, ob die Verbindung auch insoweit ordnungsgemäß hergestellt, also das Rohr für Durchführung der Verpressung ausreichend weit in das Preßfitting eingeschoben worden ist. Damit ist eine umfassende Kontrolle der Rohrverbindung möglich.

Der zweite Teil der Aufgabe wird erfindungsgemäß dadurch gelöst, daß das Preßgerät mit einem Aufnehmer zur Erfassung der Endpreßstellung versehen ist, der mit der Markiereinrichtung in der weise zusammenwirkt, daß die Markiereinrichtung erst und nur dann aktiviert wird, wenn das Preßwerkzeug seine Endpreßstellung erreicht hat. Auf diese Weise ist sichergestellt, daß die Markierung erst nach ordnungsgemäßer Verpressung angebracht wird. Aufnehmer zur Erfassung der Endpreßstellung sind beispielsweise der DE-A-196 31 019 zu entnehmen.

Wie schon oben erwähnt, kann die Markiereinrichtung als separates Druckorgan zur Erzeugung einer Druckmarkierung ausgebildet sein.

Die Markiereinrichtung kann alternativ dazu eine Einrichtung zur Erzeugung eines Energiestrahls, beispielsweise eines Laserstrahls oder eines Funkenerosionsstrahls, aufweisen, mit dem auf der Beschichtung eine Markierung beispielsweise in Form einer Einbrennmarkierung erzeugt wird. Gleiches kann mit einer als Heizstempel ausgebildeten Markiereinrichtung erzielt werden. Auch in diesem Fall sind in Kombination mit der Beschichtung deutlich erkennbare Kontraste herstellbar. Schließlich besteht die Möglichkeit, die Markiereinrichtung auch als Farbmarkiereinrichtung auszubilden.

Das vorbeschriebene Verfahren und das vorbeschriebene Preßgerät können eingesetzt werden unabhängig davon, ob der Verbindungsbereich eine Beschichtung aufweist oder nicht. Im ersteren Fall wird die Markierung auf oder in der Beschichtung vorgenommen, während im letzteren Fall die Markierung direkt auf den Verbindungsbereich aufgebracht wird.

Schließlich können die Preßgeräte auch einen Sensor zur Erfassung einer Beschichtung auf dem Rohr aufweisen. Ein solcher Sensor sollte dann so angeordnet und mit einer Einrichtung zur Aufgabe eines Aufmerksamkeitszeichens derart verbunden sein, daß ein Aufmerksamkeitszeichen erzeugt wird, wenn der Sensor beim Verpressen die Beschichtung nicht erfaßt. Auf diese Weise erhält die die Verpressung durchführende Person automatisch einen Hinweis darauf, daß das Rohr nicht ausreichend weit in das Preßfitting eingeschoben worden ist. Alternativ oder in Kombination mit dem vorgenannten Vorschlag kann auch vorgesehen sein, daß der Sensor so angeordnet und mit einer Sperreinrichtung für den Antrieb des Preßgeräts derart verbunden ist, daß der Antrieb gesperrt wird, wenn der Sensor zu Beginn des Preßvorgangs nicht die Beschichtung erfaßt. Eine Verpressung ist mit Hilfe eines solchen Preßgeräts nur dann möglich, wenn das Rohr mit der vorgesehenen Einschubtiefe in das Preßfitting eingeschoben worden ist, da nur dann die Beschichtung von dem Sensor zu Beginn des Preßvorgangs erfaßt und damit der Antrieb freigegeben wird.

In der Zeichnung ist die Erfindung anharid von Ausführungsbeispielen näher veranschaulicht. Es zeigen:
- Figur 1: einen Längsschnitt durch eine Rohrverbindung mit ausreichend eingeschobenen Rohrenden;
- Figur 2: einen Längsschnitt durch eine Rohrverbindung mit einem nicht ausreichend eingeschobenen Rohr und
- Figur 3: einen Längsschnitt durch die Rohrverbindung gemäß Figur 2 mit angesetzten Preßwerkzeugen.

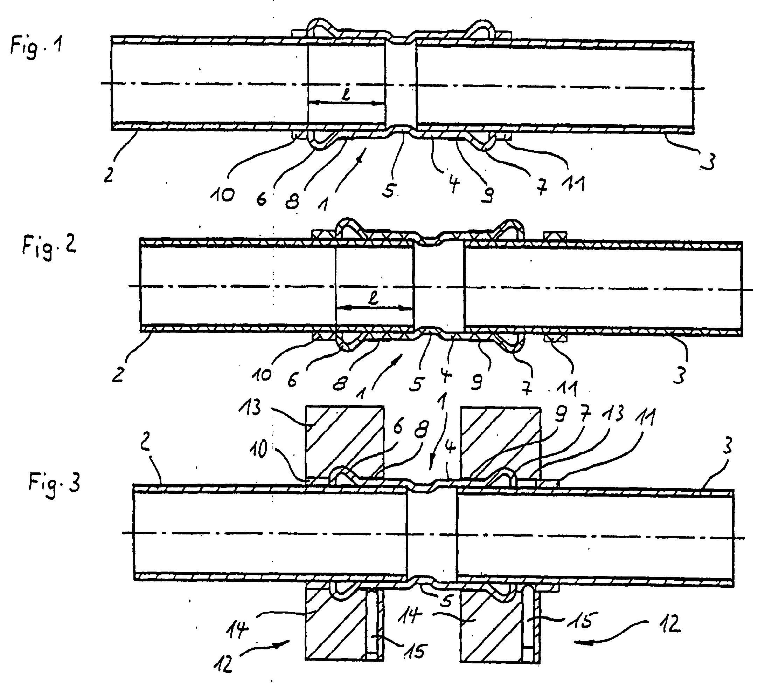

Die in Figur 1 dargestellte Rohrverbindung besteht aus einem Preßfitting 1 und zwei stirnseitig gegenüberstehenden, nur teilweise dargestellten Rohren 2, 3, die in das Preßfitting 1 von der einen bzw. anderen Seite her eingeschoben sind. Das Preßfitting 1 hat einen Zylinderabschnitt 4 mit einer als Anschlag für die Rohre 2, 3 dienenden, mittig liegenden Einschnürung 5. An den freien Enden weist das Preßfitting 1 nach außen gewölbte Ringwülste 6, 7 auf, in die innenseitig jeweils ein elastomerer Dichtring eingelegt ist, auf dessen Darstellung hier jedoch verzichtet worden ist. Beide Rohre 2, 3 sind um die vorgesehene Einschubtiefe 1 eingeschoben und liegen deshalb an der Einschnürung 5 an.

Das Preßfitting 1 weist unmittelbar neben den Ringwülsten 6, 7 ringförmige Beschichtungen 8, 9 auf. Diese Beschichtungen 8, 9 werden von dem Preßgerät beim Verpressen des Preßfittings 1 radial nach innen beaufschlagt. Die Beschichtungen 8, 9 sind so ausgebildet, daß sie ihr Aussehen aufgrund der starken Druckeinwirkung des Preßgerätes während der Verpressung ändern, beispielsweise eingeprägt werden oder soweit zerstört werden, daß das Material des Preßfittings 1 zum Vorschein kommt. Auch die anderen, oben beschriebenen Ausführungsformen und Wirkungsmechanismen von Beschichtungen kommen in Frage. In allen Fällen signalisiert die Veränderung der Beschichtungen 8, 9-, daß eine Verpressung vorgenommen worden ist.

Die Rohre 2, 3 weisen Kunststoffringe 10, 11 auf, die die Rohre 2, 3 festsitzend umgeben und jenseits der Bereiche der Einschubtiefe 1, jedoch an diese angrenzend angeordnet sind. Dadurch, daß die Kunststoffringe 10, 11 an den Stirnseiten der Ringwülste 6, 7 anliegen, ist von außen erkennbar, daß die Rohre 2, 3 ausreichend weit in das Preßfitting 1 eingeschoben sind. Die Kunststoffringe 10, 11 sind so dick ausgebildet, daß auch sie beim Verpressen von dem Preßgerät erfaßt werden, so daß sie ihr Aussehen während der Verpressung verändern, und erst dann, wenn das Preβwerkzeug seine Endpreβstellung erreicht hat beispielsweise Druckmarkierungen erhalten. Auf diese Weise erhält der Kontrolleur zusätzlich die Sicherheit, daß die Rohre 2, 3 schon vor dem Preßvorgang ausreichend weit eingeschoben waren.

In Figur 2 ist die gleiche Rohrverbindung dargestellt, so daß für die gleichen Teile die gleichen Bezugsziffern verwendet worden sind wie bei der Ausführungsform gemäß Figur 1 und auf die Beschreibung dieser Ausführungsform Bezug genommen wird. Der einzige Unterschied besteht darin, daß das rechte Rohr 3 nicht weit genug, d.h. nicht um die Einschubtiefe 1, in das Preßfitting 1 eingeschoben ist. Dies wird dadurch von außen erkennbar, daß der auf diesem Rohr 3 sitzende Kunststoffring 11 deutlichen Abstand zu der Stirnseite des benachbarten Ringwulstes 7 hat. Ein Kontrolleur kann zwar durch Veränderung des Aussehens der Beschichtungen 8, 9 sehen, daß Verpressungen stattgefunden haben. Aufgrund des Abstandes zwischen Kunststoffring 11 und Ringwulst 7 erkennt er jedoch, daß die Verpressung nicht ordnungsgemäß ist, weil das rechte Rohr 3 nicht ausreichend weit in das Preßfitting 1 eingeschoben war und deshalb die Gefahr einer Leckage droht.

Figur 3 zeigt die in Figur 2 dargestellte Rohrverbindung mit angesetztem Preßwerkzeug 12. Es versteht sich, daß das Preßwerkzeug 12 nicht gleichzeitig an beiden Enden des Preßfittings 1 angesetzt sein kann. Vielmehr werden die Verpressungen nacheinander durchgeführt.

Das Preßwerkzeug 12 hat in an sich bekannter Weise (vgl. zum Beispiel DE-A-196 31 019 und den darin zitierten Stand der Technik) eine obere und eine untere Preßbacke 13, 14, die Teil eines hier nicht näher dargestellten Preßgerätes sind und die mit Hilfe eines zu diesem Preßgerät gehörenden Antriebs zum Zwecke der radialen Komprimierung des Preßfittings. 1 und der Rohre 2, 3 gegeneinander bewegt werden können. Es ist erkennbar, daß die Preßbacken 13, 14 bei der Verpressung des linksseitigen Teils des Preßfittings 1 mit dem Ringwulst 6 sowohl die Beschichtung 8 als auch den Kunststoffring 10 beaufschlagen. Beim zusammenführen der Preßbacken 13, 14 werden deshalb auch diese druckbeaufschlagt und erleiden hierdurch eine nachträglich visuell erkennbare Veränderung ihres Aussehens. Die Veränderung ist abhängig von der Art der Beschichtung 8 bzw. des Kunststoffrings 10. Insoweit wird auf die vorstehende, allgemeine. Beschreibung verwiesen.

Die untere Preßbacke 14 ist mit einem Tastsensor 15 versehen, der beispielsweise mittels Federvorspannung radial nach innen gedrückt wird. Bei der linksseitigen Verpressung liegt er an der Beschichtung 8 an und nimmt dabei eine Stellung ein, in der er kein Aufmerksamkeitszeichen erzeugt und/oder auch nicht den Antrieb blockiert. Es versteht sich, daß seine Stellung von einer entsprechenden Schalteinrichtung erfaßt und an eine Steuereinrichtung weitergegeben wird, die die Erzeugung eines Aufmerksamkeitszeichens und/oder die Freigabe bzw. Sperrung des Antriebs steuert.

Bei der rechtsseitigen Verpressung faßt der Tastsensor 15 in die Lücke zwischen dem Ringwulst 7 und dem Kunststoffring 11 und kommt dadurch radial weiter nach innen zu liegen. In dieser Stellung wird die Steuereinrichtung so angesteuert, daß ein z.B. optisches oder akustisches Aufmerksamkeitszeichen durch das Preßgerät erzeugt und/oder der Antrieb gesperrt wird, so daß der Preßvorgang nicht durchgeführt werden kann.

Es versteht sich, daß - was hier nicht näher dargestellt ist - auch die obere Preßbacke 13 einen Tastsensor aufweist, der in der linken Verpreßstellung an den Kunststoffring 10 anliegt. Sollte dieser Kunststoffring 10 einen Abstand zum Ringwulst 6 haben, fährt dieser Tastsensor in die Lücke zwischen beiden ein und erzeugt die oben genannten Warn- bzw. Sperrmaßnahmen. In der rechtsseitigen Preßstellung liegt dieser Tastsensor dann an der Beschichtung 9 an.

## Patentansprüche

1. Verfahren zur Verbindung eines Preßfittings mit einem Rohr mittels eines Preßgerätes; bei dem Preßfitting und Rohr um eine bestimmte Einschubtiefe ineinander gesteckt und dann das Preßfitting und/oder das Rohr mit Hilfe des Preßgeräts radial nach innen plastisch verformt wird bzw. werden, wobei das Preßgerät mit einer Markiereinrichtung versehen ist, mittels der im Rahmen eines Preßvorgangs eine Markierung auf das Preßfitting und/oder das Rohr aufgebracht wird, **dadurch gekennzeichnet, daß** erst dann die Markierung aufgebracht wird, wenn das Preßwerkzeug seine Endpreßstellung erreicht hat.

2. Verfahren nach Anspruch 1, **dadurch gekennzeichnet, daß** die Markierung mittels eines Druckorgans ausgebildet wird.

3. Verfahren nach Anspruch 1, **dadurch gekennzeichnet, daß** die Markierung mittels eines Energiestrahls aufgebracht wird.

4. Verfahren nach Anspruch 3, **dadurch gekennzeichnet, daß** als Energiestrahl ein Laserstrahl oder ein Funkenerosionsstrahl verwendet wird.

5. Verfahren nach Anspruch 1, **dadurch gekennzeichnet, daß** eine Einbrennmarkierung erzeugt wird.

6. Verfahren nach Anspruch 1, **dadurch gekennzeichnet, daß** eine Farbmarkierung aufgebracht wird.

7. Verfahren nach einem der Ansprüche 1 bis 6, **dadurch gekennzeichnet, daß** auf das Rohr eine visuell erkennbare Beschichtung jenseits der vorgesehenen Einschubtiefe und an diese angrenzend aufgebracht wird.

8. Verfahren nach Anspruch 7, **dadurch gekennzeichnet, daß** die Beschichtung so angeordnet und ausgebildet wird, daß ihr Aussehen unter der Einwirkung des Preßgeräts verändert wird, und daß es nur dann verändert wird, wenn das Rohr um die bestimmte Einschubtiefe in das Preßfitting eingeschoben worden ist.

9. Preßgerät (12) zur Verbindung eines Preßfittings (1) mit einem Rohr (2, 3), wobei das Preßgerät (12) mit einer Markiereinrichtung versehen ist, mittels der im Rahmen eines Preßvorgangs eine Markierung auf das Preβfitting und/oder das Rohr aufbringbar ist, **dadurch gekennzeichnet, daß** das Preßgerät (12) mit einem Aufnehmer zur Erfassung der Endpreßstellung versehen ist, der mit der Markiereinrichtung in der Weise zusammenwirkt, daß die Markiereinrichtung erst und nur dann aktiviert wird, wenn das Preßwerkzeug (12) seine Endpreßstellung erreicht hat.

10. Preßgerät nach Anspruch 9, **dadurch gekennzeichnet, daß** die Markiereinrichtung als separates Druckorgan zur Erzeugung einer Druckmarkierung ausgebildet ist.

11. Preßgerät nach Anspruch 9, **dadurch gekennzeichnet, daß** die Markiereinrichtung mit einer Einrichtung zur Erzeugung eines Energiestrahls versehen ist.

12. Preßgerät nach Anspruch 11, **dadurch gekennzeichnet, daß** als Energiestrahl ein Laserstrahl oder ein Funkenerosionsstrahl erzeugbar ist.

13. Preßgerät nach Anspruch 9, **dadurch gekennzeichnet, daß** die Markiereinrichtung als Heizstempel zur Erzeugung einer Einbrennmarkierung ausgebildet ist.

14. Preßgerät nach Anspruch 9, **dadurch gekennzeichnet, daß** die Markiereinrichtung als Farbmarkiereinrichtung ausgebildet ist.

15. Preßgerät nach einem der Ansprüche 9 bis 14, **dadurch gekennzeichnet, daß** das Preßgerät (12) einen Sensor (15) zur Erfassung einer Beschichtung (10, 11) auf dem Rohr (2, 3) aufweist, der so angeordnet und mit einer Einrichtung zur Abgabe eines Aufmerksamkeitszeichens derart verbunden ist, daß ein Aufmerksamkeitszeichen erzeugt wird, wenn der Sensor (15) beim Verpressen die Beschichtung (10, 11) nicht erfaßt.

16. Preßgerät nach einem der Ansprüche 9 bis 15, **dadurch gekennzeichnet, daß** das Preßgerät (12) einen Sensor (15) zur Erfassung einer Beschichtung (10, 11) aufweist, der so angeordnet und mit einer Sperreinrichtung für den Antrieb des Preßgeräts (12) derart verbunden ist, daß der Antrieb gesperrt wird, wenn der Sensor (15) zu Beginn des Preßvorgangs nicht die Beschichtung (10, 11) erfaßt.

## Claims

1. Process for connecting a press fitting with a tube by means of a pressing device; in which the press fitting and tube are pushed a certain insertion depth into one another and then the press fitting and/or the tube with the help of the pressing device is or are radially deformed inwards, whereby the pressing device is provided with a marking device, by means of which as part of a pressing process a marking is applied to the press fitting and/or the tube, **characterised in that** the marking is only applied when the pressing tool has reached its end pressing position.

2. Process according to claim 1, **characterised in that** the marking is formed by means of a print element.

3. Process according to claim 1, **characterised in that** the marking is applied by means of an energy beam.

4. Process according to claim 3, **characterised in that** as the energy beam a laser beam or a spark erosion beam is used.

5. Process according to claim 1, **characterised in that** a burn-in marking is produced.

6. Process according to claim 1, **characterised in that** a colour marking is applied.

7. Process according to one of claims 1 to 6, **characterised in that** on the tube a visually identifiable coating is applied on the other side of the anticipated insertion depth and is applied adjacent to this.

8. Process according to claim 7, **characterised in that** the coating is arranged and formed such that its appearance is changed under the effect of the pressing device and that it is only changed if the tube is inserted into the press fitting by the certain insertion depth.

9. Pressing device (12) for connecting a press fitting (1) with a tube (2, 3) where the pressing device (12) is provided with a marking device, by means of which as part of a pressing process a marking can be applied to the press fitting and/or the tube, **characterised in that** the pressing device (12) is provided with a sensor to detect the end pressing position, which works together with the marking direction such that the marking direction is first and only activated when the pressing tool (12) has reached its end pressing position.

10. Pressing device according to claim 9, **characterised in that** the marking device is formed as a separate print element to produce a print marking.

11. Pressing device according to claim 9, **characterised in that** the marking device is provided with a device to produce an energy beam

12. Pressing device according to claim 11, **characterised in that** as the energy beam a laser beam or a spark erosion beam can be produced.

13. Pressing device according to claim 9, **characterised in that** the marking device is formed as a hot stamp to produce a burn-in marking.

14. Pressing device according to claim 9, **characterised in that** the marking device is formed as a colour marking device.

15. Pressing device according to one of claims 9 to 14, **characterised in that** the pressing device (12) has a sensor (15) to detect a coating (10, 11) on the tube (2, 3), which is arranged and associated with a device to give an attention signal such that an attention signal is produced if the sensor (15) upon pressing does not detect the coating (10, 11).

16. Pressing device according to one of claims 9 to 15, **characterised in that** the pressing device (12) has a sensor (15) to detect a coating (10, 11), which is arranged and associated with a blocking device for the drive of the pressing device (12) such that the drive is blocked if the sensor (15) at the start of the pressing process does not detect the coating (10, 11).

## Revendications

1. Procédé de connexion d'un embout d'emmanchement avec un tuyau au moyen d'un dispositif presseur ou de pressage, dans lequel l'embout d'emmanchement et le tuyau sont insérés l'un dans l'autre à une profondeur d'insertion définie et l'embout d'emmanchement et/ou le tuyau est (sont) ensuite déformé(s) plastiquement radialement vers l'intérieur au moyen du dispositif presseur, le dispositif presseur étant pourvu d'un dispositif de marquage, au moyen duquel un marquage est apposé dans le cadre d'un cycle de pressage sur l'embout d'emmanchement et/ou le tuyau, **caractérisé en ce que** le marquage n'est apposé que lorsque l'outil de pressage a atteint sa position finale d'insertion.

2. Procédé selon la revendication 1, **caractérisé en ce que** le marquage est conçu au moyen d'un organe d'impression.

3. Procédé selon la revendication 1, **caractérisé en ce que** le marquage est apposé au moyen d'un rayon énergétique.

4. Procédé selon la revendication 3, **caractérisé en ce qu'**un rayon laser ou un rayon d'érosion par étincelage est utilisé comme rayon énergétique.

5. Procédé selon la revendication 1, **caractérisé en ce qu'**un marquage par cuisson est généré.

6. Procédé selon la revendication 1, **caractérisé en ce qu'**un marquage de couleur est apposé.

7. Procédé selon l'une quelconque des revendications 1 à 6, **caractérisé en ce qu'**un revêtement reconnaissable à l'oeil est apposé de chaque côté de la profondeur d'insertion prévue et en limite à celle-ci.

8. Procédé selon la revendication 7, **caractérisé en ce que** le revêtement est disposé et conçu de manière à ce que son apparence se modifie sous l'action du dispositif presseur et **en ce qu'**il est uniquement modifié si le tuyau a été inséré à la profondeur d'insertion définie dans l'embout d'emmanchernent.

9. Dispositif presseur ou de pressage (12) pour la connexion d'un embout d'emmanchement (1) avec un tuyau (2, 3), dans lequel le dispositif presseur (12) est pourvu d'un dispositif de marquage, au moyen duquel un marquage peut être apposé sur l'embout d'emmanchement et/ou le tuyau dans le cadre d'un cycle de pressage, **caractérisé en ce que** le dispositif presseur (12) est pourvu d'un capteur pour enregistrer la position finale de pressage, lequel interagit avec le dispositif de marquage, de manière à ce que le dispositif de marquage soit uniquement activé si l'outil de pressage (12) a atteint sa position finale de pressage.

10. Dispositif presseur selon la revendication 9, **caractérisé en ce que** le dispositif de marquage est conçu comme un organe d'impression séparé pour la génération d'un marquage par impression.

11. Dispositif presseur selon la revendication 9, **caractérisé en ce que** le dispositif de marquage est pourvu d'un dispositif de génération d'un rayon énergétique.

12. Dispositif presseur selon la revendication 11, **caractérisé en ce qu'**un rayon laser ou un rayon d'érosion par étincelage peut être généré comme rayon énergétique.

13. Dispositif presseur selon la revendication 9, **caractérisé en ce que** le dispositif de marquage est conçu comme un poinçon thermique pour générer un marquage par cuisson.

14. Dispositif presseur selon la revendication 9, **caractérisé en ce que** le dispositif de marquage est conçu comme un dispositif de marquage de couleur.

15. Dispositif presseur selon l'une quelconque des revendications 9 à 14, **caractérisé en ce que** le dispositif presseur (12) comporte un capteur (15) pour détecter un revêtement (10, 11) sur le tuyau (2, 3), lequel est relié à un dispositif de génération de signal d'avertissement et disposé de manière à ce qu'un signal d'avertissement soit généré lorsque le capteur (15) ne détecte pas le revêtement (10, 11) lors du pressage.

16. Dispositif presseur selon l'une quelconque des revendications 9 à 15, **caractérisé en ce que** le dispositif presseur (12) comporte un capteur (15) pour détecter un revêtement (10, 11), lequel est disposé et relié à un dispositif de blocage de l'entraînement du dispositif presseur (12) de manière à ce l'entraînement soit bloqué lorsque le capteur (15) ne détecte pas le revêtement (10, 11) au début du cycle de pressage.
